# EUROPÄISCHE PATENTSCHRIFT

(11) **EP 3 440 249 B1**
(45) Veröffentlichungstag und Bekanntmachung des Hinweises auf die Patenterteilung: **28.07.2021**
(21) Anmeldenummer: 17715677.5
(22) Anmeldetag: 03.04.2017
(51) Int. Cl.: D03D 1/00, D03D 11/00, G01L 1/14

(54) **SENSORISCHES GEWEBE MIT MEHREREN GEWEBELAGEN UND VERFAHREN ZU DESSEN HERSTELLUNG**
SENSORY FABRIC HAVING A PLURALITY OF FABRIC LAYERS AND METHOD FOR THE PRODUCTION THEREOF
TEXTILE INTELLIGENT DOTÉ DE CAPTEURS, MULTICOUCHE ET PROCÉDÉ DE FABRICATION

(30) Priorität: 04.04.2016 DE 102016106071
(43) Veröffentlichungstag der Anmeldung: 13.02.2019
(73) Patentinhaber: Pilz GmbH & Co. KG, 73760 Ostfildern (DE)
(72) Erfinder: HORTER, Hansjürgen, 72644 Oberboihingen (DE); GÖNNER, Karl, 88499 Riedlingen (DE); HOFMANN, Paul, 89257 Illertissen (DE); CALISKAN, Metin, 72770 Reutlingen (DE); IBROCEVIC, Onedin, 73525 Schwäbisch Gmünd (DE); KUCZERA, Matthias, 70771 Leinfelden-Echterdingen (DE)
(74) Vertreter: Witte, Weller & Partner Patentanwälte mbB
(86) Internationale Anmeldenummer: PCT/EP2017/057848
(87) Internationale Veröffentlichungsnummer: WO 2017/174504

(56) Entgegenhaltungen:
- DE-A1-102011 111 061
- GB-A- 2 516 987
- JP-A- 2016 031 269
- US-A1- 2014 150 573

## Beschreibung

Die Erfindung betrifft ein Gewebe mit wenigstens drei übereinander angeordneten Lagen, von denen zumindest zwei Gewebelagen sind, sowie ein Verfahren zur Herstellung eines solchen Gewebes. Das Gewebe ist dazu eingerichtet eine einwirkende Kraft oder einen einwirkenden Druck zu erfassen.

Ein sensorisches Gewebe mit einer Gewebelage ist beispielsweise aus US 4 795 998 A bekannt. Leitfähige Fäden der Gewebelage kreuzen sich an Kreuzungsstellen. Abhängig von einer einwirkenden Kraft verändert sich der Übergangswiderstand zwischen den aneinander anliegenden Fäden. Dadurch kann eine auf einer der Kreuzungsstellen einwirkende Kraft erkannt werden.

WO 2005/121729 A1 beschreibt einen textilen kapazitiven Sensor mit einem vollflächig leitenden Textil als unterster Schicht und einer nicht elektrisch leitfähigen obersten Schicht. Auf diese oberste Schicht sind flächige Elektroden aufgebracht, die jeweils gemeinsam mit der untersten Schicht einen Kondensator mit variabler Kapazität bilden. Zwischen der obersten Schicht und der untersten Schicht ist ein nicht elektrisch leitfähiges elastisches Material angeordnet. Wenn durch Krafteinwirkung der Abstand zwischen den Elektroden und der untersten leitfähigen Schicht verändert wird, ändert sich die Kapazität, was durch eine entsprechende Schaltung erfasst werden kann.

DE 60102003 T2 offenbart einen leitfähigen druckempfindlichen Stoff. Dabei sind leitfähige Fäden in einer Lage gekreuzt angeordnet, wobei ohne Krafteinwirkung an den Kreuzungspunkten kein elektrisch leitfähiger Kontakt hergestellt ist. Hierfür sind elektrisch nicht leitfähige Fäden eingearbeitet, die die sich kreuzenden elektrisch leitfähigen Fäden im Ausgangszustand auf Abstand halten. Erst wenn eine Kraft oder ein Druck auf den Stoff einwirkt, wird ein elektrisch leitfähiger Kontakt an einer Kreuzungsstelle hergestellt.

Eine ähnliche Anordnung ist auch aus US 4 659 873 A bekannt. Dort sind elektrisch leitfähige Gewebelagen durch nicht leitfähige Abstandsmittel - wie etwa einen Luftspalt, nicht leitfähige Fäden oder kuppelförmige Abstandshalter voneinander beabstandet. Bei Krafteinwirkung wird ein elektrisch leitfähiger Kontakt zwischen den Gewebelagen hergestellt.

DE 10 2011 111061 A1 offenbart ein Gewebe mit zwei Stofflagen, die in parallelen Ebenen angeordnet sind, wobei jede Gewebelage fadenverkreuzte Kett- und Schussfäden umfasst und die Gewebelagen über Polfäden miteinander verbunden sind. In wenigstens eine der Gewebelagen ist dabei ein elektrisch leitfähiger Faden eingewoben, um eine Leiterbahn auszubilden.

JP 2016 031269 A offenbart einen weiteren drucksensitiven Sensor mit zwei gewebten, elektrisch leitfähigen Schichten, die auf Abstand gehalten werden, um kapazitive Sensorzellen auszubilden.

US 2014/150573 A1 offenbart eine Vorrichtung und ein Verfahren zum Messen des Drucks, der an verschiedenen Stellen eines flexiblen, biegsamen Gewebes ausgeübt wird, wobei drei gestapelte Schichten vorgesehen sind. Wenn ein Druck auf das Gewebe ausgeübt
wird, variiert ein elektrischer Widerstand, wodurch eine Druckbelastung bestimmbar ist.

GB 2 516 987 A offenbart eine energieerzeugende, energieerntende, dreidimensionale Abstandsstruktur wie beispielsweise ein Textil. Die Struktur umfasst ein piezoelektrisches Material, das als Abstandshalter zwischen leitfähigen Schichten dient, um Energie durch die Umwandlung von mechanischer Energie in elektrische Energie zu gewinnen. Das piezoelektrische Material kann ein Polymer wie Polyvinylidenfluorid (PVFD), ein Monofilamente und/oder Multifilamente sein. Die leitfähigen Schichten können aus leitfähigen Fasern bestehen, die gestrickt oder gewebt sind.

Ausgehend von dem vorstehend beschriebenen Stand der Technik kann es als Aufgabe der Erfindung angesehen werden, ein verbessertes und einfach herzustellendes sensorisches Textilmaterial zu schaffen.

Diese Aufgabe wird durch ein Gewebe sowie ein Verfahren gemäß der unabhängigen Ansprüche gelöst. Weitere Ausführungsbeispiele sind in den abhängigen Ansprüchen offenbart.

Das erfindungsgemäße Gewebe weist mehrere Gewebelagen und zumindest drei übereinander angeordnete Lagen auf, von denen zumindest zwei Gewebelagen sind. Eine dieser Gewebelagen bildet eine erste Gewebelage, eine weitere dieser Gewebelagen bildet eine zweite Gewebelage und noch eine weitere dieser Lagen bildet eine mittlere Lage, die zwischen der ersten Gewebelage und der zweiten Gewebelage angeordnet ist. Die mittlere Lage kann durch eine mittlere Gewebelage gebildet sein. Die mittlere Lage kann auch Vliesmaterial und/oder Schaummaterial und/oder eine Folie und/oder ein Gestrick und/oder ein Gewirk und/oder ein Gelege aufweisen oder daraus bestehen.

Die Gewebelagen bilden eine Sandwichanordnung. Die erste Gewebelage liegt vorzugsweise unmittelbar an der mittleren Lage an. Die zweite Gewebelage liegt auf der der ersten Gewebelage entgegengesetzten Seite vorzugsweise ebenfalls unmittelbar an der mittleren Lage an.

Die erste Gewebelage und die zweite Gewebelage enthalten jeweils elektrisch leitfähige Kettfäden und/oder Schussfäden. Die mittlere Lage bzw. Gewebelage kann auch elektrisch leitfähige Kettfäden und/oder Schussfäden aufweisen oder vollständig aus nicht elektrisch leitfähigen Fäden gebildet sein. Die erste Gewebelage, die zweite Gewebelage und die mittlere Lage bzw. Gewebelage bilden eine Sensoranordnung, die eine sich während einer Krafteinwirkung auf diese Gewebelage ändernde elektrische Eigenschaft aufweist.

Die Sensoranordnung kann eine kapazitive Sensoranordnung und/oder eine piezoelektrische Sensoranordnung und/oder eine resistive bzw. eine piezoresistive Sensoranordnung sein. Die physikalische Funktionsweise der Sensoranordnung hängt von der Ausführung der mittleren Lage ab. Wenn die mittlere Lage Garne aufweist und beispielsweise als Gewebelage ausgebildet ist, hängt die physikalische Funktionsweise der Sensoranordnung vom Garnmaterial ab. Besteht die mittlere Gewebelage beispielsweise aus nicht elektrisch leitfähigem Material, beispielsweise elektrisch nicht leitfähigen Fäden, das bzw. die ein Dielektrikum bilden, ist eine kapazitive Sensoranordnung nach Art eines Plattenkondensators erreicht. Die mittlere Lage bzw. Gewebelage kann auch Material bzw. Fäden aufweisen, die piezoelektrisches Material enthalten, so dass eine piezoelektrische Sensoranordnung gebildet ist. Außerdem besteht die Möglichkeit, dass die mittlere Gewebelage auch Material bzw. Fäden aus elektrisch leitfähigem Material aufweist, deren elektrischer Widerstand sich bei Kraft- bzw. Druckeinwirkung ändert, so dass eine resistive bzw. piezoresistive Sensoranordnung gebildet ist.

Erfindungsgemäß ist eine oberste Gewebelage von den vorhandenen Gewebelagen webtechnisch mit einer der anderen Gewebelagen verbunden. Entsprechend ist eine unterste Gewebelage von den vorhandenen Gewebelagen webtechnisch mit wenigstens einer der anderen Gewebelagen verbunden. Die oberste Gewebelage kann beispielsweise durch die erste Gewebelage und/oder die unterste Gewebelage kann beispielsweise durch die zweite Gewebelage gebildet sein. Es ist auch möglich, als oberste Gewebelage und/oder als unterste Gewebelage jeweils eine Gewebelage eines separaten Bindungssystems zu verwenden, das die erste Gewebelage, die zweite Gewebelage und die mittlere Gewebelage durch webtechnische Bindungen mittelbar miteinander verbindet, während die erste Gewebelage, die zweite Gewebelage und die mittlere Gewebelage ohne unmittelbare webtechnische Bindung lediglich aneinander anliegen.

Ein solches mehrlagiges Gewebe mit zwei oder mehr Gewebelagen lässt sich auf einer Webmaschine unmittelbar ohne Nachbearbeitung zur Verbindung der Gewebelagen herstellen. Beim Weben der ersten Gewebelage, der zweiten Gewebelage und - sofern die mittlere Lage als Gewebelage ausgeführt ist - der mittleren Gewebelage können dabei gleichzeitig die webtechnischen Bindungen hergestellt werden, um diese drei Gewebelagen mittelbar über ein Bindungssystem miteinander zu verbinden. Nachfolgende Bearbeitungsschritte, bei denen die Gewebelagen durch Nähen, Kleben, Sticken oder dergleichen miteinander verbunden werden müssen, können entfallen. Die zwei oder drei Gewebelagen können gleichzeitig auf einer Webmaschine hergestellt und mittelbar über ein Bindungssystem webtechnisch miteinander verbunden werden. Dies reduziert den Aufwand bei der Herstellung eines mehrlagigen sensorischen Gewebes erheblich, weil ein aufwendiges manuelles Positionieren, Ausrichten und Verbinden der einzelnen Gewebelagen entfällt.

Vorteilhaft ist es, wenn das Material der mittleren Lage in Form von im Querschnitt runden Garnen und/oder bandförmigen Elementen bei der Herstellung der ersten und zweiten Gewebelage dazwischen angeordnet werden kann, insbesondere durch einen Schuss- und/oder Ketteintrag in einer Webmaschine, oder wenn die mittlere Lage als Gewebelage ausgeführt ist.

Durch das webtechnische Verbinden der unterschiedlichen Gewebelagen miteinander kann außerdem die Streuung der Sensoranordnung durch Herstellungstoleranzen minimiert werden. Der Toleranzbereich der Änderung einer elektrischen Eigenschaft der Sensoranordnung abhängig von der einwirkenden Kraft bzw. dem einwirkenden Druck kann geringer sein, als bei sensorischen Geweben, bei denen die Gewebelagen durch Kleben oder Nähen oder dergleichen verbunden werden. Die Bindungskräfte der webtechnischen Bindung lassen sich einfach einstellen. Die webtechnischen Bindungen sind vorzugsweise gleichmäßig über die Fläche des Gewebes verteilt. Über die Dichte der Bindungsstellen und deren Verteilung kann die lokale Abweichung der Änderung einer elektrischen Eigenschaft der Sensoranordnung abhängig von der einwirkenden Kraft bzw. dem einwirkenden Druck gering gehalten werden. Dies vereinfacht das Kalibrieren des sensorischen Gewebes beim Einsatz in einer Sensorvorrichtung.

Das erfindungsgemäße Gewebe kann auch als sensorisches Mehrlagengewebe bezeichnet werden. Es ist dazu eingerichtet, Kraft- bzw. Druckeinwirkung an bestimmten Stellen zu lokalisieren. Somit ist das Gewebe in der Lage, ortsaufgelöst die Stelle der Kraft- bzw. Druckeinwirkung zu ermitteln und optional zusätzlich auch den Betrag der einwirkenden Kraft bzw. des einwirkenden Drucks zu charakterisieren. Solche Gewebe sind vielfältig einsetzbar. Sie können beispielsweise auf einem Untergrund verlegt werden, um die Position von sich bewegenden Objekten anzuzeigen. Dadurch ist es beispielsweise möglich, Kollisionen zwischen sich bewegenden Objekten bzw. zwischen sich bewegenden Objekten und stehenden Hindernissen zu vermeiden. Eine andere Anwendungsmöglichkeit besteht darin, Greifer, Roboterarme oder dergleichen an ihrer Außenfläche mit einem sensorischen Gewebe auszustatten, so dass ein Kontakt und die Kontaktstelle des Greifers bzw. Roboterarms mit einem Objekt ermittelt werden kann. Es sind auch vielfältige andere Anwendungen möglich.

Es ist vorteilhaft, wenn lediglich drei Lagen bzw. Gewebelagen vorhanden sind. Hierbei ist zusätzlich zu den drei Lagen bzw. Gewebelagen ein Bindungssystem vorhanden, das die oberste Gewebelage und/oder die unterste Gewebelage zur Fixierung der drei Gewebelagen bildet. Zusätzliche Lagen, beispielsweise Gewebelagen, zur mechanischen Verstärkung, elektrischen Isolation, elektromagnetischen Abschirmung, etc. können ebenfalls vorhanden sein.

Es ist außerdem vorteilhaft, wenn die erste Gewebelage elektrisch leitfähige Streifen und elektrisch nicht leitfähige Streifen aufweist, die abwechselnd nebeneinander angeordnet sind und die sich in Kettrichtung oder in Schussrichtung erstrecken. Die Streifenbildung in Kettrichtung kann dabei sehr einfach dadurch erreicht werden, dass in einem elektrisch leitfähigen Streifen zumindest ein elektrisch leitfähiger Kettfaden und in einem elektrisch nicht leitfähigen Streifen ausschließlich elektrisch nicht leitfähige Kettfäden angeordnet werden. Analog hierzu kann zur Bildung eines elektrisch leitfähigen Streifens in Schussrichtung wenigstens ein elektrisch leitfähiger Schussfaden und in einem elektrisch nicht leitfähigen Streifen ausschließlich elektrisch nicht leitfähige Schussfäden verwendet werden. Es ist außerdem möglich, dass die zweite Gewebelage elektrisch leitfähige Streifen und elektrisch nicht leitfähige Streifen aufweist, die abwechselnd nebeneinander angeordnet sind und die sich in Kettrichtung oder in Schussrichtung erstrecken. Diese können, wie im Zusammenhang mit der ersten Gewebelage erläutert, beim Weben hergestellt werden.

Bei einem bevorzugten Ausführungsbeispiel kann in der ersten Gewebelage oder der zweiten Gewebelage in wenigstens einem elektrisch nicht leitfähigen Streifen jeweils ein elektrisch leitfähiger Zwischenstreifen eingewebt ist, der gegenüber den beiden benachbarten elektrisch leitfähigen Streifen in dieser Gewebelage elektrisch isoliert ist. Insbesondere kann jeder elektrisch leitfähige Zwischenstreifen in der ersten Gewebelage oder zweiten Gewebelage mittels einer Durchkontaktierung mit genau einem elektrisch leitfähigen Streifen der jeweils anderen Gewebelage verbunden sein. Dadurch ist ein elektrisches Verbinden des Gewebes mit einer externen Schaltung über eine einzige Gewebelage möglich und vorzugsweise an einer einzigen Gewebekante. Der Anschlussbereich an dieser Gewebekante erstreckt sich vorzugsweise nur über einen Gewebekantenbereich, der sich zum Beispiel an eine Ecke des Gewebes anschließen kann. An diesem Anschlussbereich können Mittel zum Aufstecken einer Steckverbindung vorgesehen sein.

Es ist vorteilhaft, wenn die in einem elektrisch leitfähigen Streifen in Richtung des Streifens verlaufenden elektrisch leitfähigen Fäden (Kettfäden oder Schussfäden) durch wenigstens eine Querkontaktierung elektrisch miteinander verbunden sind. Dadurch ist sichergestellt, dass alle elektrische leitfähigen Kettfäden oder Schussfäden dieses Streifens unmittelbar elektrisch miteinander verbunden sind und eine elektrische Spannung oder ein elektrischer Strom an jedem dieser elektrisch leitfähigen Kettfäden oder Schussfäden abgegriffen werden kann.

Die Querkontaktierung kann entweder über eine geeignete Bindung in Verbindung mit einer passenden Kett- und Schussdichte hergestellt werden oder beispielsweise durch wenigstens einen quer zur Richtung des Streifens verlaufenden elektrisch leitfähigen Schussfaden bzw. Kettfaden gebildet sein.

Bei einem bevorzugten Ausführungsbeispiel sind die Streifen der ersten Gewebelage quer und vorzugsweise rechtwinklig zu den Streifen der zweiten Gewebelage ausgerichtet. Verlaufen die Streifen in der ersten Gewebelage beispielsweise in Kettrichtung, so verlaufen die Streifen in der zweiten Gewebelage beispielsweise in Schussrichtung oder umgekehrt. Dadurch kann eine Gitter- bzw. Matrixstruktur von leitfähigen Streifen erreicht werden.

Vorzugsweise ist die Breite eines leitfähigen Streifens quer zu seiner Erstreckung in Kettrichtung oder in Schussrichtung kleiner als die Breite eines benachbarten nicht leitfähigen Streifens. Diese Ausgestaltung kann in der ersten und/oder der zweiten Gewebelage verwirklicht sein. Durch das Minimieren der Breite der nicht leitfähigen Streifen, kann der sensorisch nutzbare Flächenanteil des Gewebes maximiert werden.

Bei einem Ausführungsbeispiel kann ein Kettfaden oder Schussfaden der ersten Gewebelage aus einem elektrisch nicht leitfähigen Streifen eine webtechnische Bindung mit einem Schussfaden oder Kettfaden einer anderen Gewebelage bilden. Dadurch wird vermieden, dass das Erzeugen der webtechnischen Bindung einen Einfluss auf die sensorische Eigenschaft des Gewebes bzw. der Sensoranordnung hat. Insbesondere kann dadurch eine unmittelbare elektrische Verbindung zwischen der ersten Gewebelage und der zweiten Gewebelage vermieden werden. Entsprechend kann ein Kettfaden oder ein Schussfaden der zweiten Gewebelage aus einem elektrisch nicht leitfähigen Streifen eine webtechnische Bindung mit einem Schussfaden oder Kettfaden einer anderen Gewebelage bilden.

Erfindungsgemäß ist ein Bindungssystem mit elektrisch nicht leitfähigen Bindungskettfäden und/oder elektrisch nicht leitfähigen Bindungsschussfäden vorhanden. Das Bindungssystem verbindet die drei Gewebelagen mittelbar. Dabei können die Bindungskettfäden und/oder die Bindungsschussfäden entweder lediglich untereinander und/oder mit einer der Gewebelagen webtechnische Bindungsstellen bilden.

Es ist vorteilhaft, wenn die Lagen bzw. Gewebelagen lediglich aneinander anliegen und untereinander nicht unmittelbar webtechnisch verbunden sind.

Weitere vorteilhafte Ausführungen der Erfindung ergeben sich aus den abhängigen Patentansprüchen, der Beschreibung sowie der Zeichnung. Nachfolgend werden bevorzugte Ausführungsbeispiele der Erfindung anhand der beigefügten Zeichnungen im Einzelnen erläutert. Es zeigen:
Figur 1 eine stark schematisierte Schnittdarstellung eines Ausführungsbeispiels eines Gewebes quer zur Schussrichtung,
Figur 2 das Gewebe Ausführung 1 in einer schematischen Explosionsdarstellung,
Figur 3 eine blockschaltbildähnliche Explosionsdarstellung des Aufbaus des Gewebes gemäß der Figuren 1 und 2,
Figur 4 das Gewebe aus Figur 3 bei hergestellter elektrischer Kontaktierung in einer blockschaltbildähnlichen Darstellung,
Figur 5 eine alternative Ausführungsform des Gewebes in einer blockschaltbildähnlichen Darstellung,
Figuren 6 bis 8 jeweils eine schematische Darstellung eines Ausführungsbeispiels einer durch das Gewebe gebildeten Sensoranordnung,
Figur 9 eine Prinzipdarstellung eines qualitativen Verlaufs eines Ohmschen Gesamtwiderstands in Abhängigkeit von der einwirkenden Kraft F bei einer resistiven Sensoranordnung aus Figur 6,
Figuren 10 bis 13 jeweils eine schematische Prinzipdarstellung unterschiedlicher webtechnischer Bindungen mittels eines Bindungssystems des Gewebes und
Figur 14 eine beispielhafte schematische Prinzipdarstellung des Webvorgangs zum Weben des Gewebes auf einer Webmaschine.

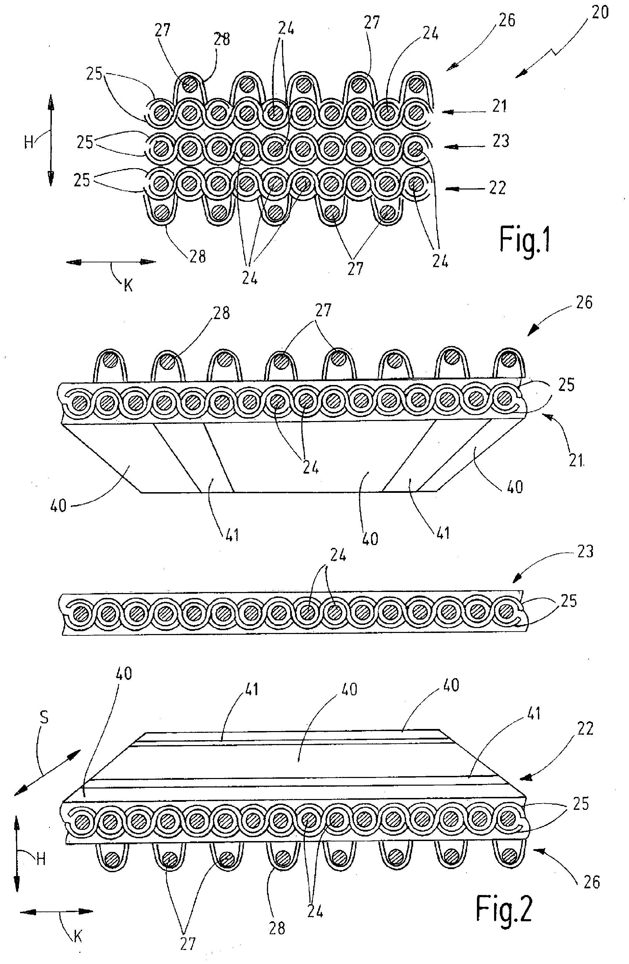

In den Figuren 1 bis 8 ist schematisch in verschiedenen Darstellungen und Ansichten ein mehrlagiges Gewebe 20 veranschaulicht. Das Gewebe 20 hat wenigstens drei und beim Ausführungsbeispiel genau drei Lagen, die beispielsgemäß durch Gewebelagen 21, 22, 23 gebildet sind. Jede Gewebelage 21, 22, 23 weist jeweils mehrere Schussfäden 24 sowie Kettfäden 25 auf. Abgesehen von der durch die webtechnischen Bindungen erzeugten Ondulation innerhalb einer Gewebelage 21, 22, 23 erstrecken sich die Kettfäden 25 in einer Kettrichtung K und die Schussfäden 24 in einer Schussrichtung S, die rechtwinklig zur Kettrichtung K orientiert ist. Die Schussrichtung S und die Kettrichtung K spannen eine Ebene auf, in der sich das Gewebe 20 erstreckt. Rechtwinklig zu dieser Ebene aus Schussrichtung S und Kettrichtung K hat das Gewebe 20 eine Dicke in einer Höhenrichtung H. Die Abmessung des Gewebes 20 in Höhenrichtung H ist kleiner als die Abmessung in Schussrichtung S und die Abmessung in Kettrichtung K, vorzugsweise um wenigstens den Faktor 10 bis 100.

Die Schussfäden 24 und die Kettfäden 25 jeder Gewebelage 21, 22, 23 sind innerhalb der betreffenden Gewebelage 21, 22, 23 webtechnisch miteinander verbunden. Bei den in den Zeichnungen dargestellten erfindungsgemäßen Ausführungsbeispielen sind die Gewebelagen 21, 22, 23 nicht unmittelbar webtechnisch miteinander verbunden, sondern es ist ein Bindungssystem 26 vorhanden, das Bindungsschussfäden 27 und Bindungskettfäden 28 aufweist. Die Befestigung der Gewebelagen 21, 22, 23 miteinander bzw. aneinander erfolgt beispielsgemäß ausschließlich über das Bindungssystem 26. Die Schussfäden 24 und die Kettfäden 25 jeder einzelnen Gewebelage 21, 22, 23 sind dabei ausschließlich innerhalb der jeweiligen Gewebelage 21, 22, 23 webtechnisch miteinander gebunden.

Eine der Gewebelagen bildet eine erste Gewebelage 21, die elektrisch leitfähige Schussfäden 24 und/oder elektrisch leitfähige Kettfäden 25 aufweist. Eine weitere Gewebelage bildet eine zweite Gewebelage 22, die ebenfalls elektrisch leitfähige Schussfäden 24 und/oder elektrisch leitfähige Kettfäden 25 aufweist. Zwischen der ersten Gewebelage 21 und der zweiten Gewebelage 22 ist eine mittlere Gewebelage 23 angeordnet. Die mittlere Gewebelage 23 liegt mit einer Seite unmittelbar an der ersten Gewebelage 21 und mit der entgegengesetzten Seite unmittelbar an der zweiten Gewebelage 22 an. Die drei Gewebelagen 21, 22, 23 werden - wie bereits erläutert - durch das Bindungssystem 26 aneinander gehalten.

Als mittlere Lage kann anstelle des Gewebematerials alternativ oder zusätzlich auch Vlies und/oder Schaum und/oder Folienmaterial und/oder andere Textilmaterialien wie etwa ein Gestrick und/oder ein Gewirk und/oder ein Gelege verwendet werden. Vorteilhaft ist es, wenn das Material der mittleren Lage in Form von im Querschnitt runden Garnen und/oder bandförmigen Elementen bei der Herstellung der ersten und zweiten Gewebelage dazwischen angeordnet werden kann, insbesondere durch einen Schusseintrag in einer Webmaschine.

Das Gewebe 20 hat eine oberste Gewebelage LO sowie eine unterste Gewebelage LU. Abhängig davon, wie die webtechnische Bindung zwischen den drei Gewebelagen 21, 22, 23 erfolgt, kann die erste Gewebelage 21 die oberste Gewebelage LO und/oder die zweite Gewebelage 22 die unterste Gewebelage LU bilden.

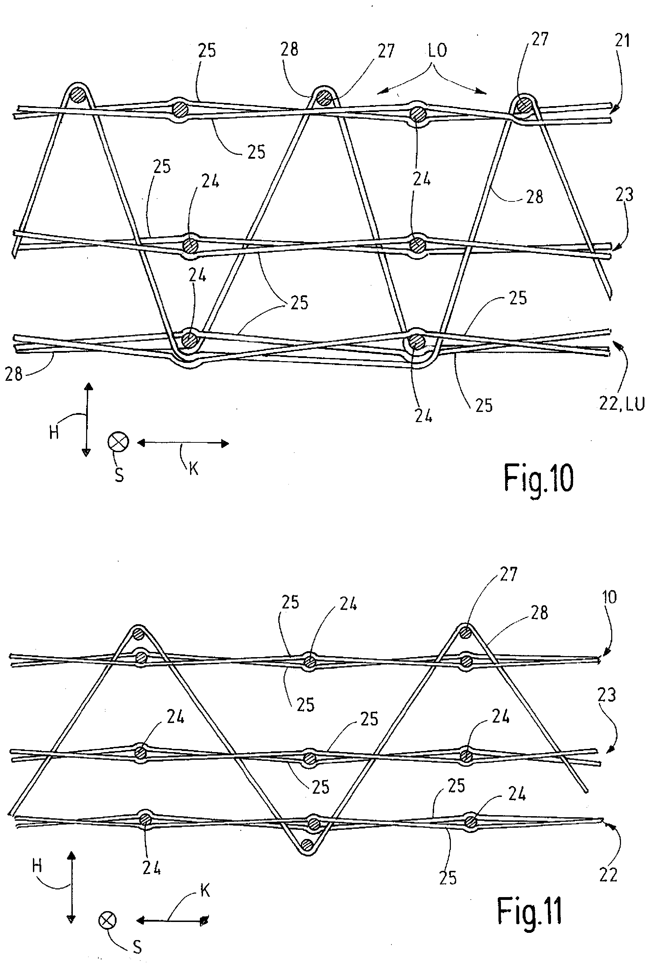

Bei dem in Figur 10 veranschaulichten Ausführungsbeispiel sind die Bindungsschussfäden 27 des Bindungssystems 26 lediglich benachbart zur ersten Gewebelage 21 angeordnet. Die Bindungskettfäden 28 bilden webtechnische Bindungen mit den Bindungsschussfäden 27 sowie den Schussfäden 24 der zweiten Gewebelage 22.

Bei bestimmten Ausführungsbeispielen könnte jeweils eine Teilmenge der Schussfäden 24 der ersten Gewebelage 21 und der zweiten Gewebelage 22 zur Herstellung der webtechnischen Bindungsstellen verwenden. Bei dem in Figur 10 dargestellten Ausführungsbeispiel wird die oberste Gewebelage LO durch die Bindungsschussfäden 27 und die Bindungskettfäden 28 benachbart zur ersten Gewebelage 21 gebildet. Die zweite Gewebelage 22 bildet gemeinsam mit den Bindungskettfäden 28 die unterste Gewebelage LU.

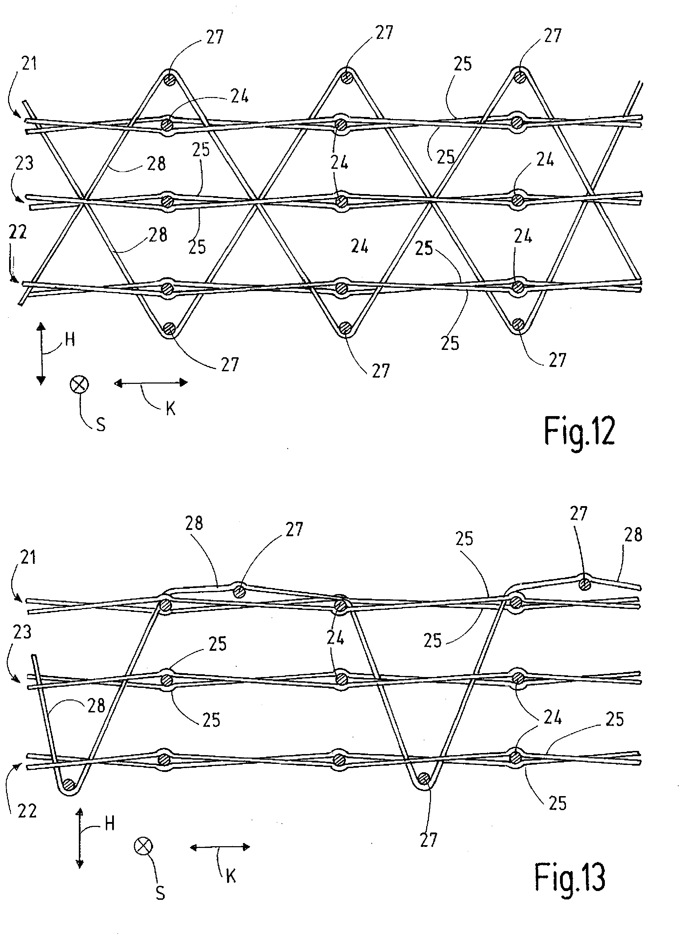

Bei den weiteren beispielhaften Bindungsvarianten gemäß der Figuren 11 bis 13 ist sowohl die oberste Gewebelage LO, wie auch die unterste Gewebelage LU jeweils benachbart zur ersten Gewebelage 21 bzw. zur zweiten Gewebelage 22 angeordnet und durch Bindungsschussfäden 27 und Bindungskettfäden 28 gebildet. Die Position der Bindungsschussfäden 27 kann in Kettrichtung K in etwa auf Höhe der Schussfäden 24 der Gewebelagen 21, 22, 23 (Figuren 11 und 12) oder in Kettrichtung K versetzt hierzu sein (Figur 13). Die Anzahl der Bindungsschussfäden 27 kann von der Anzahl der Schussfäden 24 der Gewebelagen 21, 22, 23 pro Längenabschnitt des Gewebes in Kettrichtung K abweichen. Zum Beispiel wird bei der Ausführung in Figur 12 eine doppelt so große Anzahl an Bindungsschussfäden 27 pro Längenabschnitt verwendet, wie in den Gewebelagen 21, 22, 23.

Die Art der webtechnischen Bindungen innerhalb einer Gewebelage 21, 22, 23 sowie die Art der webtechnischen Bindung durch das Bindungssystem 26 ist im Prinzip beliebig wählbar. Es können Atlasbindungen, Leinwandbindungen, Köperbindungen, Dreherbindungen, usw. eingesetzt werden. Die Bindungsarten in den Gewebelagen 21, 22, 23 können identisch sein oder - abweichend zu den dargestellten bevorzugten Ausführungsbeispielen - auch voneinander verschieden sein.

In den Gewebelagen 21, 22, 23 sowie im Bindungssystem 26 können auch unterschiedliche Garne und/oder Garnstärken und/oder unterschiedlich viele Garne und/oder unterschiedliche Garnquerschnitte verwendet werden. in der mittleren Lage bzw. mittleren Gewebelage 23 können beispielsweise bandförmige Schussfäden und/oder bandförmige Kettfäden verwendet werden.

Wie sich aus den vorstehenden Erläuterungen ergibt, sind beispielsgemäß wenigstens drei Gewebelagen 21, 22, 23 vorhanden und optional zusätzlich eine oder zwei Gewebelagen, die durch das Bindungssystem 26 gebildet sind und die oberste Gewebelage LO benachbart zur ersten Gewebelage 21 und/oder die unterste Gewebelage LU benachbart zur zweiten Gewebelage 22 bilden können.

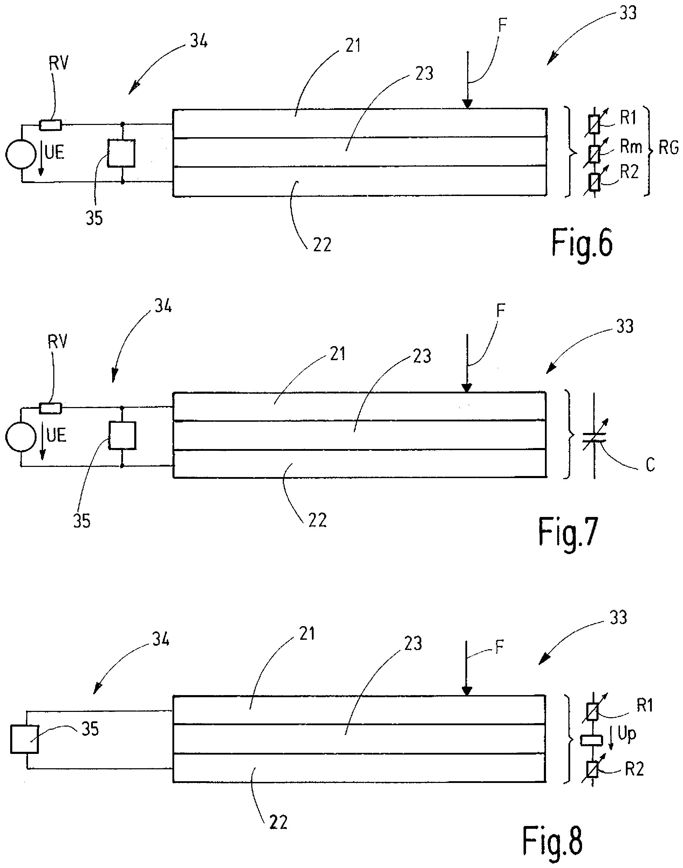

Die Gewebelagen 21, 22, 23 bilden gemeinsam eine Sensoranordnung 33 (Figuren 6 - 8). Die Sensoranordnung 33 hat wenigstens eine sich ändernde elektrische Eigenschaft. Beispielsweise kann die Sensoranordnung 33 einen sich abhängig von einer auf die Sensoranordnung 33 einwirkenden Kraft F ändernden Gesamtwiderstand RG, eine sich ändernde Kapazität C oder eine sich ändernde Piezospannung Up aufweisen. Die elektrischen Eigenschaften der Sensoranordnung 33 hängen von den Garneigenschaften ab, insbesondere in der mittleren Gewebelage 23.

Bei einem Ausführungsbeispiel (Figur 6) weist die mittlere Gewebelage 23 elektrisch leitfähige Schussfäden 24 und/oder Kettfäden 25 auf, die piezoresistives Material aufweisen, so dass sich der piezoresistive Widerstand Rm der mittleren Gewebelage 23 abhängig von der einwirkenden Kraft F ändert. Der piezoresistive Widerstand Rm ist der Durchgangswiderstand der mittleren Gewebelage 23 bei einem Stromfluss von der ersten Gewebelage 21 durch die mittlere Gewebelage 23 in die zweite Gewebelage 22 oder umgekehrt. Außerdem wird durch eine einwirkende Kraft F ein erster Übergangswiderstand R1 zwischen der ersten Gewebelage 21 und der benachbarten mittleren Gewebelage 23 sowie ein zweiter Übergangswiderstand R2 zwischen der zweiten Gewebelage 22 und der mittleren Gewebelage 23 gebildet, der sich abhängig von der einwirkenden Kraft F ändert. Die drei Gewebelagen erzeugen daher eine Reihenschaltung aus einem ersten Übergangswiderstand R1, einem piezoresistiven Widerstand Rm sowie einem zweiten Übergangswiderstand R2, die sich jeweils abhängig von der einwirkenden Kraft F ändern. Diese Reihenschaltung hat einen Gesamtwiderstand RG, der sich aus der Summe des ersten Übergangswiderstandes R1, des piezoresistiven Widerstandes Rm und des zweiten Übergangswiderstandes R2 ergibt.

Die erste Gewebelage 21 und die zweite Gewebelage 24 sind an eine Auswerteschaltung 34 angeschlossen. Dabei kann durch die Auswerteschaltung eine externe Spannung UE über einen optionalen Vorwiderstand RV die Auswerteschaltung 34 zwischen die erste Gewebelage 21 und die zweite Gewebelage 22 angelegt werden. Der Vorwiderstand RV kann dabei in Reihe zu dem Gesamtwiderstand RG geschaltet sein. Dabei ist es möglich, über eine Auswerteeinheit 35 der Auswerteschaltung 34 die an dem Gesamtwiderstand RG anliegende Spannung und/oder den durch die Auswerteschaltung 34 bzw. die Sensoranordnung 33 fließenden Strom auszuwerten, da sich die am Gesamtwiderstand RG anliegende Spannung bzw. der durch den Gesamtwiderstand RG fließende Strom abhängig von der einwirkenden Kraft F ändert. Vorzugsweise ist die externe Spannung UE eine Gleichspannung. Wie in Figur 6 schematisch veranschaulicht ist, wertet die Auswerteeinheit 35 beispielsgemäß die am Gesamtwiderstand RG anliegende Spannung aus. Zur Auswertung eines Stromes kann die Auswerteeinheit 35 parallel zu einem Messwiderstand geschaltet sein, der wiederum in Reihe zum Gesamtwiderstand RG der Sensoranordnung 33 geschaltet ist. Als Messwiderstand kann beispielsweise auch der Vorwiderstand RV verwendet werden.

Bei einem weiteren Ausführungsbeispiel ist die Sensoranordnung 33 als kapazitive Sensoranordnung ausgestaltet (Figur 7). Dabei bildet die mittlere Gewebelage 23 ein Dielektrikum und die erste Gewebelage 21 und die zweite Gewebelage 22 sind als Elektroden ausgeführt und entsprechen sozusagen den Platten eines Plattenkondensators. Die an die Sensoranordnung 33 angeschlossene Auswerteschaltung 34 entspricht der Ausführung nach Figur 6, so dass auf die vorstehende Erläuterung verwiesen werden kann. Abhängig von der einwirkenden Kraft F verformt sich die Sensoranordnung 33, so dass sich der Abstand zwischen der ersten Gewebelage 21 und der zweiten Gewebelage 22 an der Stelle ändert, an der die Kraft F auftritt. Dabei verändert sich die Kapazität C der Sensoranordnung 33, was durch die Auswerteschaltung 34 bzw. die Auswerteeinheit 35 erfasst werden kann. Dabei kann die Auswerteeinheit 35 die zwischen der ersten Gewebelage 21 und der zweiten Gewebelage 22 anliegende Spannung messen. Als externe Spannung UE wird vorzugsweise eine Gleichspannung angelegt.

Bei dem in Figur 8 veranschaulichten Ausführungsbeispiel der Sensoranordnung 33 weist die mittlere Gewebelage 23 Schussfäden 24 oder Kettfäden 25 auf, die piezoelektrisches Material enthalten und damit eine Piezospannung Up erzeugen können. Abhängig von der einwirkenden Kraft F verändert sich die Piezospannung Up und außerdem der erste Übergangswiderstand R1 und der zweite Übergangswiderstand R2. Die zwischen der ersten Gewebelage 21 und der zweiten Gewebelage 22 anliegende Spannung kann durch die Auswerteschaltung 34 erfasst und ausgewertet werden. Das Anlegen einer externen Spannung ist in diesem Fall nicht erforderlich und die Auswerteschaltung 34 kann ausschließlich aus der an die erste Gewebelage 21 und die zweite Gewebelage 22 angeschlossenen Auswerteeinheit 35 bestehen.

Somit kann die Sensoranordnung 33 bei Ausführungsbeispielen, bei denen ein Strom von der ersten Gewebelage 21, durch die mittlere Gewebelage 23 zu der zweiten Gewebelage 22 - oder in umgekehrte Richtung - fließen kann, eine Reihenschaltung aus mehreren und beispielsgemäß drei veränderlichen elektrischen Eigenschaften aufweisen, die sich abhängig von der einwirkenden Kraft F an der betreffenden Stelle lokal ändern.

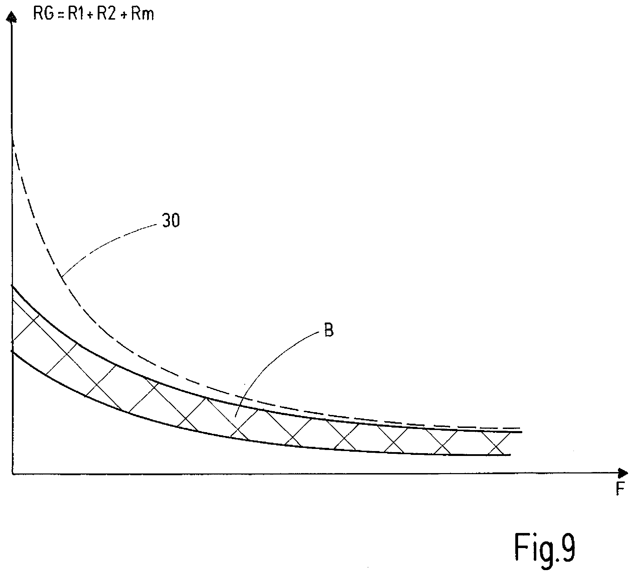

Das webtechnische Verbinden der Gewebelagen 21, 22, 23 mit Bindungssystem 26 hat den Vorteil, dass die Streuung der Sensoranordnung 33 enger begrenzt werden kann. In Figur 9 ist beispielhaft der Gesamtwiderstand RG abhängig von der einwirkenden Kraft F anhand des Ausführungsbeispiels der Sensoranordnung 33 gemäß Figur 6 veranschaulicht. Die Gewebelagen 21, 22, 23 sind nicht miteinander vernäht, verklebt oder dergleichen. Es hat sich herausgestellt, dass durch das ausschließliche webtechnische Verbinden der Gewebelagen 21, 22, 23 der sich aufgrund von Herstellungstoleranzen ergebende Toleranzbereich B des von der Kraft F abhängigen Gesamtwiderstandes RG gegenüber anderen mehrlagigen sensorischen Geweben begrenzt werden kann. Der sich durch das webtechnische Verbinden der Gewebelagen ergebende Toleranzbereich B ist schematisch kreuzschraffiert in Figur 9 veranschaulicht. Demgegenüber vergrößert sich der Toleranzbereich B, wenn die Gewebelagen 21, 22, 23 nach ihrer Herstellung beispielsweise durch Nähen oder anderweitig mechanisch miteinander verbunden werden, was schematisch durch die gestrichelte obere Grenze BO in Figur 9 veranschaulicht ist, die gegenüber der oberen Grenze des Toleranzbereichs B des erfindungsgemäßen Gewebes 20 verschoben ist. Bei den hier beschriebenen Ausführungsbeispielen wird daher zwischen den Gewebelagen 21, 22, 23 ausschließlich eine webtechnische Bindung hergestellt, ohne, dass zusätzliche mechanische, physikalische oder chemische Verbindung zwischen den Gewebelagen 21, 22, 23 erzeugt werden.

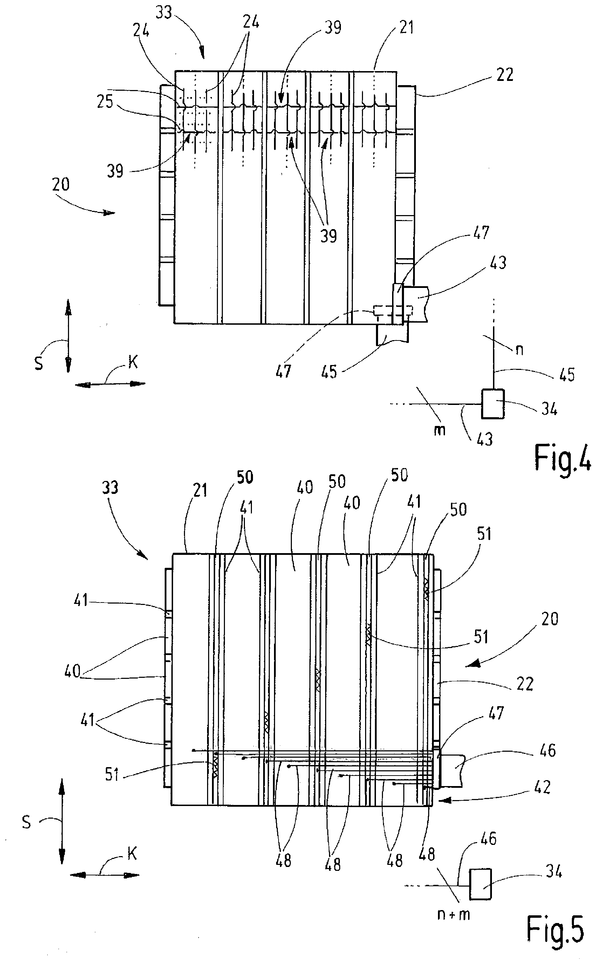

Aus den Figuren 2 bis 5 ist zu erkennen, dass die erste Gewebelage 21 beispielsgemäß in Schussrichtung S abwechselnd elektrisch leitfähige Streifen 40 und elektrisch nicht leitfähige Streifen 41 aufweist. Beispielsweise sind in einem elektrisch leitfähigen Streifen 40 zumindest einige oder alle Schussfäden 24 elektrisch leitfähig, während im elektrisch nicht leitfähigen Streifen 41 ausschließlich elektrisch nicht leitfähige Schussfäden 24 angeordnet sind. Die Kettfäden 25 der ersten Gewebelage 21 können dabei bei einem Ausführungsbeispiel elektrisch nicht leitfähig sein, insbesondere dann, wenn die vorhandenen elektrisch leitfähigen Schussfäden 24 in einem leitfähigen Streifen 40 einen elektrischen Kontakt zueinander aufweisen. Alternativ ist es auch möglich, dass zumindest einige oder alle der Kettfäden 25 der ersten Gewebelage 21 elektrisch leitfähig sind und jeweils eine Querkontaktierung 39 in einem bzw. allen elektrisch leitfähigen Streifen 40 bilden. Wenn elektrisch leitfähige Kettfäden 25 als Querkontaktierung 39 verwendet werden, muss verhindert werden, dass die elektrisch leitfähigen Streifen 40 durch diese Kettfäden 25 elektrisch kurzgeschlossen werden. Hierzu können die elektrisch leitfähigen Kettfäden im Bereich des elektrisch nicht leitfähigen Streifens 41 aufgetrennt werden, so dass eine elektrische Verbindung unterbrochen ist. Dazu kann es beispielsweise vorteilhaft sein, dass ein elektrisch leitfähiger Kettfaden 25 innerhalb eines nicht leitfähigen Streifens 41 eine Flottung bildet, die bevorzugt an zwei voneinander beabstandeten Stellen durchtrennt wird. Der herausgetrennte Teil des Kettfadens 25 kann entnommen werden. Die Trennung eines elektrisch leitfähigen Kettfadens 25, der in den elektrisch leitfähigen Streifen 40 jeweils eine Querkontaktierung 39 bildet, ist in Figur 4 stark schematisiert gezeigt.

Die zweite Gewebelage 22 bildet in Kettrichtung K verlaufende elektrisch leitfähige Streifen 40 und elektrisch nicht leitfähige Streifen 41, die in Schussrichtung S abwechselnd nebeneinander angeordnet sind. In einem elektrisch leitfähigen Streifen 40 können einige oder alle der Kettfäden 25 elektrisch leitfähig sein und in einem nicht leitfähigen Streifen 41 werden ausschließlich elektrisch nicht leitfähige Kettfäden 25 eingesetzt. Ist einer oder sind mehrere der Schussfäden 24 in der zweiten Gewebelage 22 zur Bildung einer Querkontaktierung 39 elektrisch leitfähig (analog zu der Beschreibung der ersten Gewebelage 21), kann eine elektrische Verbindung zwischen den elektrisch leitfähigen Streifen 40 durch den betreffenden elektrisch leitfähigen Schussfaden 24 dadurch verhindert werden, dass dieser im Bereich der elektrisch nicht leitfähigen Streifen 41 durchtrennt wird. Vorzugsweise wird der betreffende elektrisch leitfähige Schussfaden 24 innerhalb jedes nicht leitfähigen Streifens 41 an zwei voneinander beabstandeten Stellen durchtrennt und der herausgetrennte Teil des Schussfadens 24 entnommen. Hierzu kann der betreffende Schussfaden 24 zumindest in einem Bereich des jeweiligen nicht elektrisch leitfähigen Streifens 41 eine Flottung aufweisen, die herausgetrennt wird.

Die Querkontaktierung 39 in einem elektrisch leitfähigen Streifen 40 kann in einer oder beiden Gewebelagen 21, 22 alternativ oder zusätzlich auch durch Nähen und/oder Sticken mit einem elektrisch leitfähigen Garn und/oder Aufbringen einer elektrisch leitfähigen Schicht, beispielsweise durch Kleben und/oder Drucken und/oder Aufsprühen, usw. hergestellt werden.

Die Verlaufsrichtung der Streifen 40, 41 in der ersten Gewebelage 21 ist rechtwinklig zur Verlaufsrichtung der Streifen 40, 41 in der zweiten Gewebelage 22 ausgerichtet. In Abwandlung zu dem dargestellten Ausführungsbeispiel könnten die Steifen 40, 41 in der ersten Gewebelage 21 auch in Kettrichtung und die Streifen 40, 41 in der zweiten Gewebelage 22 auch in Schussrichtung S verlaufen.

Durch die beschriebene Anordnung der elektrisch leitfähigen Streifen 40 und der elektrisch nicht leitfähigen Streifen 41 in der ersten Gewebelage 21 und der zweiten Gewebelage 22 entsteht sozusagen eine Gitter- oder Matrixstruktur. Beim Einwirken einer Kraft F auf das Gewebe 20 bzw. die Sensoranordnung 33 kann dadurch festgestellt werden, an welcher Stelle die Kraft F auf die Gewebefläche des Gewebes 20 einwirkt. Die Ortsauflösung hängt dabei von der Anzahl und der Breite der Streifen 40, 41 ab. Es ist vorteilhaft, wenn die elektrisch nicht leitfähigen Streifen 41 quer zu ihrer Erstreckungsrichtung eine möglichst geringe Breite aufweisen, so dass die elektrische Isolierung zwischen den jeweils benachbarten elektrisch leitfähigen Streifen 40 gewährleistet ist, aber ein möglichst großer Flächenanteil als aktive Sensorfläche verwendet werden kann.

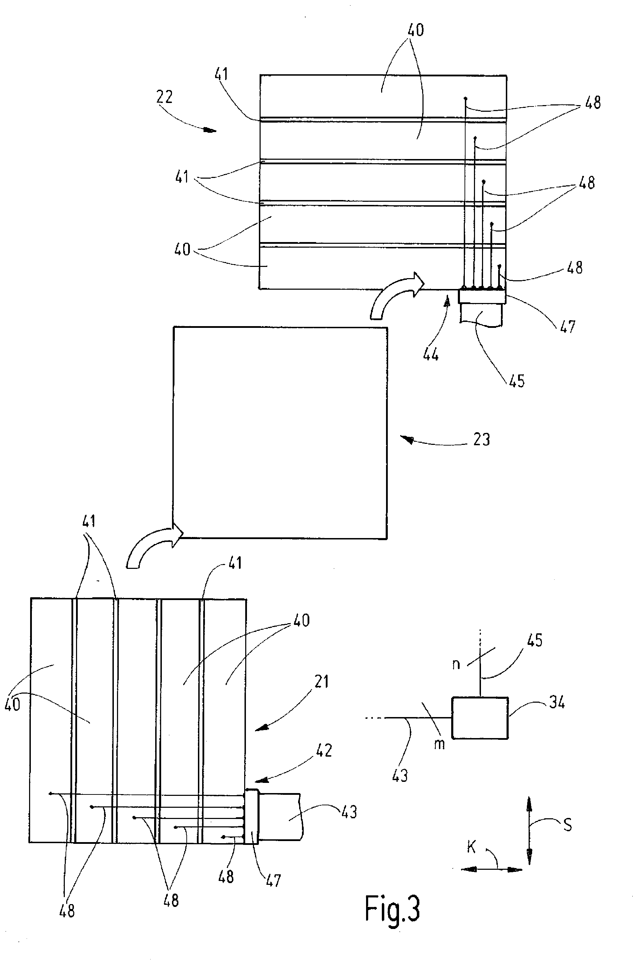

Die elektrisch leitfähigen Streifen 40 der ersten Gewebelage 21 sind beim Ausführungsbeispiel gemäß Figur 3 und 4 an einer einzigen Seite beispielsgemäß an einer ersten Seite 42 elektrisch mit einer ersten Leitung 43 verbunden. Die erste Leitung 43 weist abhängig von der Anzahl der leitfähigen Streifen 40 entsprechend viele Leiter bzw. Adern auf. Beim Ausführungsbeispiel hat die erste Leitung 43 m Adern bzw. Leiter (m = 2, 3, 4,...).

Entsprechend sind die leitfähigen Streifen 40 der zweiten Gewebelage 22 an einer einzigen Seite und beispielsgemäß einer zweiten Seite 44 mit einer zweiten Leitung 45 elektrisch verbunden. Die zweite Leitung 45 hat entsprechend der Anzahl der elektrisch leitfähigen Streifen 40 mehrere Leiter oder Adern und beim Ausführungsbeispiel beispielsgemäß n Leiter bzw. Adern (n = 2, 3, 4,...). Die Anzahl m und die Anzahl n können gleich groß oder voneinander verschieden sein.

Die Leitungen 43, 45 können jeweils über einen Stecker 47 oder ein anderes Verbindungsmittel direkt in einem Anschlussbereich, beispielsweise an der Gewebekante der betreffenden Gewebelage 21, 22, elektrisch mit den elektrisch leitfähigen Streifen 40 verbunden werden. An diesem Anschlussbereich kann daher ein Anschlussmittel zum Anbringen eines Steckers 47 vorhanden sein. Dazu können quer zu den elektrisch leitfähigen Streifen 40 in der Gewebestruktur der betreffenden Gewebelage 21, 22 verlaufende elektrisch leitfähige Verbindungsleiter 48 vorhanden sein oder alternativ auf die Gewebelage 21, 22 aufgebracht werden. Bei den Verbindungsleitern 48 kann es sich beispielsweise um elektrisch leitfähige Schussfäden 24 (z.B. in der ersten Gewebelage 21) oder um elektrisch leitfähige Kettfäden 25 (z.B. in der zweiten Gewebelage 22) handeln. Jeder Verbindungsleiter 48 ist nur mit jeweils einem der elektrisch leitfähigen Streifen 40 und einem Kontakt im Anschlussbereich elektrisch verbunden und gegenüber den anderen elektrisch leitfähigen Streifen 40 elektrisch isoliert. Der erforderliche Bauraum für den Anschlussbereich zum Anschließen des Steckers 47 bzw. der Leitungen 43, 45 an der Gewebekante kann dabei sehr klein sein und die Aufwand zur Herstellung der elektrischen Verbindung ist gering. Bei Verlegen eines sensorischen Gewebes 20 vor Ort muss lediglich noch die externe erste bzw. zweite Leitung 43, 45 verlegt und angeschlossen werden. Alle anderen elektrischen Kontaktierungen können bereits vorher bei der Herstellung erzeugt werden.

Wie in Figur 4 veranschaulicht ist, sind die erste Seite 42 und die zweite Seite 44 benachbart zueinander angeordnet, wobei sich eine der beiden Seiten und beispielsgemäß die erste Seite 42 in Kettrichtung K und die jeweils andere der beiden Seiten und beispielsgemäß die zweite Seite 44 in Schussrichtung S erstreckt. Dadurch ist eine einfache elektrische Kontaktierung auch bei größeren Flächen an zwei benachbarten Seiten 42, 44 möglich.

Die Auswerteschaltung 34 wird an die Leitungen 43, 45 angeschlossen. In der Auswerteschaltung 34 kann nicht nur erkannt werden, dass eine Kraft F auf das Gewebe 20 bzw. die Sensoranordnung 33 einwirkt, sondern es kann auch erkannt werden, an welcher Kreuzungsstelle zwischen einem elektrisch leitfähigen Streifen 40 der ersten Gewebelage 21 und einem elektrisch leitfähigen Streifen 40 der zweiten Gewebelage 22 die Kraft F einwirkt, da sämtliche elektrisch leitfähige Streifen 40 über separate Leiter an die Auswerteschaltung 34 angeschlossen sind.

Eine weitere Ausführungsform zur Vereinfachung der elektrischen Kontaktierung zwischen der Sensoranordnung 33 und der Auswerteschaltung 34 ist in Figur 5 veranschaulicht. Dort sind sowohl die elektrisch leitfähigen Steifen 40 der ersten Gewebelagen 21, als auch die elektrisch leitfähigen Streifen 40, der zweiten Gewebelage 22 an einer gemeinsamen Seite und beispielsgemäß der ersten Seite 42 des Gewebes 20 elektrisch an eine gemeinsame Leitung 46 angeschlossen. Die gemeinsame Leitung 46 weist eine Anzahl von Adern oder Leitern auf, die zumindest der Summe aus der Anzahl von elektrisch leitfähigen Streifen 40 der ersten Gewebelagen 21 und der Anzahl von elektrisch leitfähigen Streifen 40 der zweiten Gewebelage 22 entspricht. Die elektrische Kontaktierung des Gewebes 22 erfolgt somit ausschließlich an einer einzigen Gewebekante und ist dadurch weiter vereinfacht, insbesondere bei großflächigen Geweben 20, die beispielsweise als Bodenbelag verwendet werden.

Um die Kontaktierung an einer einzigen Seite über eine gemeinsame Leitung 46 zu ermöglichen, ist entweder in der ersten Gewebelage 21 oder der zweiten Gewebelage 22 in jedem elektrisch nicht leitfähigen Streifen 41 jeweils ein elektrisch leitfähiger Zwischenstreifen 50 eingewebt. Der elektrisch leitfähige Zwischenstreifen 50 ist gegenüber den beiden benachbarten elektrisch leitfähigen Streifen 40 der Gewebelage 21 bzw. 22 elektrisch isoliert, beispielsweise mit Abstand angeordnet. Jeder elektrisch leitfähige Zwischenstreifen 50 ist mittels einer Durchkontaktierung 51 mit genau einem elektrisch leitfähigen Streifen 40 der jeweils anderen Gewebelagen 22 bzw. 21 verbunden. Die Durchkontaktierung 51 kann dadurch erreicht werden, dass mindestens ein elektrisch leitfähiger Faden den Zwischenstreifen 50 mit dem jeweils zugeordneten elektrisch leitfähigen Streifen 40 der jeweils anderen Gewebelage 22 bzw. 21 verbindet. Bei dem in Figur 5 veranschaulichten Ausführungsbeispiel sind die elektrisch leitfähigen Zwischenstreifen 50 in der ersten Gewebelage 21 vorhanden und stellen mittels der Durchkontaktierungen 51 Verbindungen zu den elektrisch leitfähigen Streifen 40 der zweiten Gewebelage 22 her. Somit kann die elektrische Kontaktierung jedes elektrisch leitfähigen Streifens 40 der zweiten Gewebelage 22 über die Durchkontaktierung 51 und den elektrisch leitfähigen Zwischenstreifen 50 an der ersten Gewebelage 21 und mithin an eine gemeinsamen Seite des Gewebes 20 erfolgen. Im Übrigen erfolgt der Anschluss an die gemeinsame Leitung 46 über Verbindungsleiter 48 von den elektrisch leitfähigen Streifen 40 und Zwischenstreifen 50, wie es im Zusammenhang mit den Figuren 3 und 4 beschrieben wurde.

Der wenigstens eine Faden der Durchkontaktierung 51 kann ein elektrisch leitfähiger Kettfaden und/oder elektrisch leitfähiger Schussfaden mindestens eines der zu verbindenden Streifen 40, 50 und z.B. des elektrisch leitfähigen Zwischenstreifens 50 sein, die mit dem jeweils zugeordneten elektrisch leitfähigen Streifen 40 webtechnisch bei der Herstellung des Gewebes 20 verbunden wird oder umgekehrt.

Die Durchkontaktierungen 51 können alternativ zum dargestellten Ausführungsbeispiel auch durch andere elektrische Verbindungen im Anschluss an das Herstellen des Gewebes 20 erzeugt werden, beispielsweise durch Nähen eines leitfähigen Riegels, durch Einbringen einer Niet aus einem elektrisch leitfähigen Material, usw. Es ist jedoch bevorzugt, wenn die Durchkontaktierung 51 bereits beim Weben des Gewebes 20 auf einer Webmaschine hergestellt wird.

Eine Durchkontaktierung 51 durchsetzt die mittlere Lage 23. Abhängig von der Ausführung der Sensoranordnung 33 kann dabei eine elektrische Verbindung mit der mittleren Lage 23 hergestellt werden, wenn diese im Bereich der Durchkontaktierung 51 elektrisch leitfähige Bestandteile aufweist, beispielsweise bei der Ausführung nach Figur 6. Im unbelasteten Zustand der Sensoranordnung 33 ist der elektrische Widerstand Rm der mittleren Lage 23 ausreichend groß, so dass die elektrische Verbindung der Durchkontaktierung 51 mit der mittleren Lage 23 die Funktion nicht beeinträchtigt. Es ist auch möglich, die elektrische Verbindung zwischen der Durchkontaktierung 51 und der mittleren Lage 23 durch Isolationsmaßnahmen zu verhindern.

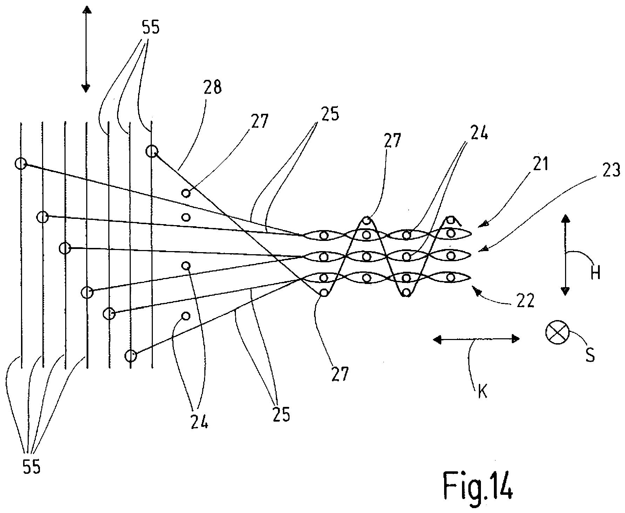

In Figur 14 ist stark schematisiert blockschaltbildähnlich ein Webvorgang veranschaulicht, wie er auf einer Webmaschine zur Herstellung des Gewebes 20 ausgeführt werden kann. Die Webmaschine weist für ein Gewebe nach Figur 11 mindestens und beispielsweise genau sieben Webschäfte 55 auf. Für eine gewebebasierte elektrische Verbindung werden zusätzliche Schäfte benötigt. Die Webschäfte 55 können sich in Höhenrichtung H unabhängig voneinander nach oben und nach unten bewegen und führen jeweils die Kettfäden 25 einer der Gewebelagen 21, 22, 23 oder die Bindungskettfäden 28. Durch eine entsprechende Fachbildung können die Schussfäden 24 bzw. der Bindungsschussfaden 27 eingetragen und angeschlagen werden. Die Art der Fachbildung und die Anzahl der eingetragenen Schussfäden 24 bzw. Bindungsschussfäden 27 hängen von der gewünschten Bindungsart ab und können variieren. Figur 14 zeigt diesbezüglich lediglich beispielhaft eine von vielen Möglichkeiten.

Möglichkeiten zur Herstellung des Gewebes 20 mit einer Webmaschine sind beispielsweise aus der Veröffentlichung von Pelin Gurkan Unal mit dem Titel "3D-Woven Fabrics" bekannt (veröffentlicht in "Woven Fabrics", Edited by Han-Yong Jeon, ISBN 978-953-51-0607-4, abrufbar unterhttp ://www.intechopen.com/books/woven-fabrics.

Die Erfindung betrifft ein mehrlagiges sensorisches Gewebe 20 mit mehreren und beispielsgemäß drei Gewebelagen 21, 22, 23. Jede Gewebelage 21, 22, 23 weist Schussfäden 24 und Kettfäden 25 auf. Weiter ist ein Bindungssystem 26 mit Bindungsschussfäden 27 und Bindungskettfäden 28 vorgesehen. Die Gewebelagen 21, 22, 23 sind webtechnisch mittelbar über das Bindungssystem 26 aneinander befestigt. Die Verbindung zwischen den Gewebelagen 21, 22, 23 wird beim Herstellen der Gewebelagen 21, 22, 23 durch das Weben hergestellt. Eine nachträgliche Verbindung der Gewebelagen 21, 22, 23 kann daher entfallen.

### Bezugszeichenliste:

- 20: Gewebe
- 21: erste Gewebelage
- 22: zweite Gewebelage
- 23: mittlere Gewebelage
- 24: Schussfaden
- 25: Kettfaden
- 26: Bindungssystem
- 27: Bindungsschussfaden
- 28: Bindungskettfaden

- 33: Sensoranordnung
- 34: Auswerteschaltung
- 35: Auswerteeinheit

- 39: Querkontaktierung
- 40: elektrisch leitfähiger Streifen
- 41: elektrisch nicht leitfähiger Streifen
- 42: erste Seite
- 43: erste Leitung
- 44: zweite Seite
- 45: zweite Leitung
- 46: gemeinsame Leitung
- 47: Stecker
- 48: Verbindungsleiter

- 50: elektrisch leitfähiger Zwischenstreifen
- 51: Durchkontaktierung

- 55: Webschaft
- B: Toleranzbereich
- BO: Obere Grenze des Toleranzbereichs beim Stand der Technik
- C: Kapazität
- H: Höhenrichtung
- K: Kettrichtung
- LO: oberste Gewebelage
- LU: unterste Gewebelage
- R1: erster Übergangswiderstand
- R2: zweiter Übergangswiderstand
- RG: Gesamtwiderstand
- Rm: piezoresistiver Widerstand
- RV: Vorwiderstand
- S: Schussrichtung
- Up: Piezospananung

## Patentansprüche

1. Gewebe (20) mit wenigstens drei übereinander angeordneten Lagen, wobei zumindest zwei davon Gewebelagen sind, von denen eine Gewebelage eine unterste Gewebelage (LU) und eine andere Gewebelage eine oberste Gewebelage (LO) bildet,
wobei eine der Gewebelagen eine erste Gewebelage (21) bildet, die elektrisch leitfähige Kettfäden (25) und/oder elektrisch leitfähige Schussfäden (24) aufweist,
wobei eine weitere der Gewebelagen eine zweite Gewebelage (22) bildet, die elektrisch leitfähige Kettfäden (25) und/oder elektrisch leitfähige Schussfäden (24) aufweist,
wobei eine der Lagen eine mittlere Lage (23) bildet, die zwischen der ersten Gewebelage (21) und der zweiten Gewebelage (22) angeordnet ist,
wobei die erste Gewebelage (21), die zweite Gewebelage (22) und die mittlere Lage (23) eine Sensoranordnung (33) bilden, die eine sich während einer Krafteinwirkung auf die Lagen (21, 22, 23) ändernde elektrische Eigenschaft (RG, C, Up) aufweisen,
wobei die oberste Gewebelage (LO) webtechnisch mit einer der anderen vorhandenen Lagen (22, 23, LU) verbunden ist,
und wobei die unterste Gewebelage (LU) webtechnisch mit einer der anderen vorhandenen Lagen (21, 23, LO) verbunden ist,
**dadurch gekennzeichnet, dass**
ein Bindungssystem (26) mit elektrisch nicht leitfähigen Bindungskettfäden (28) und elektrisch nicht leitfähigen Bindungsschussfäden (27) vorhanden ist, wobei das Bindungssystem (26) durch Bildung von webtechnischen Bindungen zur Verbindung der Gewebelagen (21, 22, 23) eingerichtet ist,
und dadurch dass die erste Gewebelage (21), die zweite Gewebelage (22) und die mittlere Lage (23) nicht unmittelbar webtechnisch miteinander verbunden sind, sondern mittels des zusätzlichen Bindungssystems (26).

2. Gewebe nach Anspruch 1, **dadurch gekennzeichnet, dass** die oberste Gewebelage (LO) durch die erste Gewebelage (21) gebildet ist.

3. Gewebe nach Anspruch 1 oder 2, **dadurch gekennzeichnet, dass** die unterste Gewebelage (LU) durch die zweite Gewebelage (22) gebildet ist.

4. Gewebe nach einem der vorhergehenden Ansprüche, **dadurch gekennzeichnet, dass** die mittlere Lage (23) eine Gewebelage ist.

5. Gewebe nach einem der vorhergehenden Ansprüche, **dadurch gekennzeichnet, dass** nur zwei oder drei Gewebelagen (21, 22, 23) vorhanden sind.

6. Gewebe nach einem der vorhergehenden Ansprüche, **dadurch gekennzeichnet, dass** die erste Gewebelage (21) abwechselnd angeordnete elektrisch leitfähige Streifen (40) und elektrisch nicht leitfähige Streifen (41) aufweist, die sich parallel zueinander in Kettrichtung (K) oder in Schussrichtung (S) erstrecken.

7. Gewebe nach einem der vorhergehenden Ansprüche, **dadurch gekennzeichnet, dass** die zweite Gewebelage (22) abwechselnd angeordnete elektrisch leitfähige Streifen (40) und elektrisch nicht leitfähige Streifen (41) aufweist, die sich parallel zueinander in Kettrichtung (K) oder in Schussrichtung (S) erstrecken.

8. Gewebe nach Anspruch 6 und nach Anspruch 7, **dadurch gekennzeichnet, dass** die Streifen (40, 41) der ersten Gewebelage (21) quer zu den Streifen (40, 41) der zweiten Gewebelage (22) ausgerichtet sind.

9. Gewebe nach einem der Ansprüche 6 bis 8, **dadurch gekennzeichnet, dass** die erste Gewebelage (21) und die zweite Gewebelage (22) an einer gemeinsamen Seite (42) des Gewebes (20) elektrisch mit einer Auswerteschaltung (34) verbunden sind.

10. Gewebe nach einem der Ansprüche 6 bis 9, **dadurch gekennzeichnet, dass** die in einem elektrisch leitfähigen Streifen (40) in Richtung des Streifens (40) verlaufenden elektrisch leitfähigen Fäden (24, 25) durch wenigstens eine Querkontaktierung (39) elektrisch miteinander verbunden sind.

11. Gewebe nach einem der Ansprüche 6 bis 10, **dadurch gekennzeichnet, dass** mindestens ein Kettfaden (25) oder mindestens ein Schussfaden (24) der ersten Gewebelage (21) aus einem elektrisch nicht leitfähigen Streifen (41) eine webtechnische Bindung mit einem Schussfaden (24) oder Kettfaden (25) einer anderen Gewebelage (22, 23) bildet.

12. Gewebe nach einem der Ansprüche 6 bis 11, **dadurch gekennzeichnet, dass** mindestens ein Kettfaden (25) oder mindestens ein Schussfaden (24) der zweiten Gewebelage (22) aus einem elektrisch nicht leitfähigen Streifen (41) eine webtechnische Bindung mit einem Schussfaden (24) oder Kettfaden (25) einer anderen Gewebelage (21, 23) bildet.

13. Verfahren zur Herstellung eines Gewebes (20) nach einem der vorhergehenden Ansprüche, wobei die erste Gewebelage (21) und die zweite Gewebelage (22) auf einer gemeinsamen Webmaschine hergestellt werden.

14. Verfahren nach Anspruch 13, **dadurch gekennzeichnet, dass** zusätzlich die mittlere Lage (23) als Gewebelage ausgeführt ist und alle drei Lagen (21 , 22 , 23) auf einer gemeinsamen Webmaschine hergestellt werden.

15. Verfahren nach einem der vorhergehenden Ansprüche 13 oder 14, **dadurch gekennzeichnet, dass** bei der Herstellung der ersten Gewebelage (21) und der zweiten Gewebelage (22) die webtechnische Bindung zur Verbindung der ersten Gewebelage (21), der zweiten Gewebelage (22) und der mittleren Lage (23) gebildet werden.

## Claims

1. Woven fabric having at least three layers disposed on top of one another, wherein at least two of the latter are woven fabric layers, of which one woven fabric layer forms a lowermost woven fabric layer (LU) and another woven fabric layer forms an uppermost woven fabric layer (LO),
wherein one of the woven fabric layers forms a first woven layer (21) which has electrically conductive warp threads (25) and/or electrically conductive weft (24) threads,
wherein a further of the woven fabric layers forms a second woven fabric layer (22) which has electrically conductive warp threads (25) and/or electrically conductive weft (24) threads,
wherein one of the layers forms an intermediate layer (23) which is disposed between the first woven fabric layer (21) and the second woven fabric layer (22),
wherein the first woven fabric layer (21), the second woven fabric layer (22), and the intermediate layer form a sensor arrangement (33) which has an electrical property (RF, C, Up) that varies while a force acts on the layers,
wherein the uppermost woven fabric layer in terms of weaving technology is connected to one of the other woven fabric layers present; and
wherein the lowermost woven fabric layer (LO) in terms of weaving technology is connected to one of the other layers (22, 23, LU) present
**characterized in that**
a binding system (26) having electrically non-conductive binding warp threads (28) and electrically non-conductive binding weft threads (27) is present, wherein the binding system (26) is configured for connecting the woven fabric layers (21, 22, 23) by forming bindings in terms of weaving technology, and **in that**.
the first woven fabric layer (21), the second woven fabric layer (22), and the intermediate layer (23) in terms of weaving technology are not directly interconnected, but by means of the binding system (26).

2. The woven fabric according to claim 1, **characterized in that** the uppermost woven fabric layer (LO) is formed by the first woven fabric layer (21).

3. The woven fabric according to claim 1 or 2, **characterized in that** the lowermost woven fabric layer (LU) is formed by the second woven fabric layer.

4. The woven fabric according to any preceding claim, **characterized in that** the intermediate layer (23) is a woven fabric layer.

5. The woven fabric according to claim 1, **characterized in that** only two or three woven fabric layers (21, 22, 23) are present.

6. The woven fabric according to any preceding claim, **characterized in that** the first woven fabric layer (21) has electrically conductive strips (40) and electrically non-conductive strips (41) which are disposed in an alternating manner and which extend so as to be mutually parallel in the warp direction (K) or in the weft direction (S).

7. The woven fabric according to any preceding claim 1, **characterized in that** the second woven fabric layer (22) has electrically conductive strips (40) and electrically non-conductive strips (41) which are disposed in an alternating manner and which extend so as to be mutually parallel in the warp direction (K) or in the weft direction (S).

8. The woven fabric according to claims 6 and 7, wherein the strips (40, 41) of the first woven fabric layer (21) are aligned transversely to the strips (40, 41) of the second woven fabric layer (22).

9. The woven fabric according to claim any one of claim 6 to 8, **characterized in that** the first woven fabric layer (21) and the second woven fabric layer (22) are electrically connected on a common side (42) of the woven fabric to an evaluating circuit (34).

10. The woven fabric according to any one of claims 6 to 9, **characterized in that** the electrically conductive threads (24, 25) that in an electrically conductive strip (40) run in the direction of said strip (40) are electrically inter-connected by at least one transverse contacting arrangement (39).

11. The woven fabric according to any one of claims 6 to 10, **characterized in that** at least one warp thread (25) or at least one weft thread (24) of the first woven fabric layer (21) from one electrically non-conductive strip (41) in terms of weaving technology forms a binding with a weft thread (24) or warp thread (25) of another woven fabric layer (22, 23).

12. The woven fabric according to any one of claims 6 to 11, **characterized in that** at least one warp thread (25) or at least one weft thread (24) of the second woven fabric layer (22) from one electrically non-conductive strip (41) in terms of weaving technology forms a binding with a weft thread (24) or warp thread (25) of another woven fabric layer (21, 23).

13. Method for producing a woven fabric (20) according to any preceding claim 1, wherein the first woven fabric layer (21) and the second woven fabric layer (22) are produced on a common weaving machine.

14. The method according to claim 13, **characterized in that** additionally the intermediate layer (23) is embodied as a woven fabric layer and all three layers (21, 22, 23) are produced on a common weaving machine.

15. The method according to preceding claim 13 or 14, **characterized in that** in the process of production of the first woven fabric layer (21) and the second woven fabric layer (22) the binding by means of weaving technology between the first woven fabric layer (21), the second woven fabric layer (22), and the intermediate layer is formed.

## Revendications

1. Tissu (20), comprenant au moins trois couches superposées, dans lequel au moins deux sont des couches de tissu dont une couche de tissu constitue une couche de tissu inférieure (LU) et une autre couche de tissu constitue une couche de tissu supérieure (LO),
l'une des couches de tissu constituant une première couche de tissu (21) qui présente des fils de chaîne électroconducteurs (25) et/ou des fils de trame électroconducteurs (24),
une autre des couches de tissu constituant une deuxième couche de tissu (22) qui présente des fils de chaîne électroconducteurs (25) et/ou des fils de trame électroconducteurs (24),
l'une des couches constituant une couche intermédiaire (23) qui est disposée entre la première couche de tissu (21) et la deuxième couche de tissu (22),
la première couche de tissu (21), la deuxième couche de tissu (22) et la couche intermédiaire (23) constituant un ensemble de capteurs (33) qui présentent une propriété électrique (RG, C, Up) variable pendant une application de force sur les couches (21, 22, 23),
la couche de tissu supérieure (LO) étant reliée par une technique de tissage à l'une des autres couches existantes (22, 23, LU),
et la couche de tissu inférieure (LU) étant reliée par une technique de tissage à l'une des autres couches existantes (21, 23, LO),
**caractérisé en ce qu'**un système d'armure (26) avec des fils de chaîne d'armure non électroconducteurs (28) et des fils de trame d'armure non électroconducteurs (27) est présent, le système d'armure (26) étant aménagé par la formation d'armures tissées destinées à relier les couches de tissu (21, 22, 23),
et **en ce que** la première couche de tissu (21), la deuxième couche de tissu (22) et la couche intermédiaire (23) ne sont pas reliées directement les unes aux autres par une technique de tissage mais au moyen du système d'armure supplémentaire (26).

2. Tissu selon la revendication 1, **caractérisé en ce que** la couche de tissu supérieure (LO) est formée par la première couche de tissu (21).

3. Tissu selon la revendication 1 ou 2, **caractérisé en ce que** la couche de tissu inférieure (LU) est formée par la deuxième couche de tissu (22).

4. Tissu selon l'une quelconque des revendications précédentes, **caractérisé en ce que** la couche intermédiaire (23) est une couche de tissu.

5. Tissu selon l'une quelconque des revendications précédentes, **caractérisé en ce qu'**il n'existe que deux ou trois couches de tissu (21, 22, 23).

6. Tissu selon l'une quelconque des revendications précédentes, **caractérisé en ce que** la première couche de tissu (21) présente des bandes électroconductrices (40) et des bandes non électroconductrices (41), disposées en alternance, qui s'étendent en parallèle les unes aux autres dans le sens de la chaîne (K) ou dans le sens de la trame (S).

7. Tissu selon l'une quelconque des revendications précédentes, **caractérisé en ce que** la deuxième couche de tissu (22) présente des bandes électroconductrices (40) et des bandes non électroconductrices (41), disposées en alternance, qui s'étendent en parallèle les unes aux autres dans le sens de la chaîne (K) ou dans le sens de la trame (S).

8. Tissu selon la revendication 6 et la revendication 7, **caractérisé en ce que** les bandes (40, 41) de la première couche de tissu (21) sont orientées transversalement aux bandes (40, 41) de la deuxième couche de tissu (22).

9. Tissu selon l'une quelconque des revendications 6 à 8, **caractérisé en ce que** la première couche de tissu (21) et la deuxième couche de tissu (22) sont reliées électriquement à un circuit d'évaluation (34) sur une face commune (42) du tissu (20).

10. Tissu selon l'une quelconque des revendications 6 à 9, **caractérisé en ce que** les fils électroconducteurs (24, 25) s'étendant dans une bande électroconductrice (40) dans le sens de la bande (40) sont reliés électriquement les uns aux autres par au moins un contact transversal (39).

11. Tissu selon l'une quelconque des revendications 6 à 10, **caractérisé en ce qu'**au moins un fil de chaîne (25) ou au moins un fil de trame (24) de la première couche de tissu (21) provenant d'une bande non électroconductrice (41) forme une armure tissée avec un fil de trame (24) ou un fil de chaîne (25) d'une autre couche de tissu (22, 23).

12. Tissu selon l'une quelconque des revendications 6 à 11, **caractérisé en ce qu'**au moins un fil de chaîne (25) ou au moins un fil de trame (24) de la deuxième couche de tissu (22) provenant d'une bande non électroconductrice (41) forme une armure tissée avec un fil de trame (24) ou un fil de chaîne (25) d'une autre couche de tissu (21, 23).

13. Procédé de fabrication d'un tissu (20) selon l'une quelconque des revendications précédentes, dans lequel la première couche de tissu (21) et la deuxième couche de tissu (22) sont fabriquées sur un métier à tisser commun.

14. Procédé selon la revendication 13, **caractérisé en ce qu'**en outre la couche intermédiaire (23) est réalisée sous la forme d'une couche de tissu et l'ensemble des trois couches (21, 22, 23) est fabriqué sur un métier à tisser commun.

15. Procédé selon l'une quelconque des revendications précédentes 13 ou 14, **caractérisé en ce que** lors de la fabrication de la première couche de tissu (21) et de la deuxième couche de tissu (22), l'armure tissée pour relier la première couche de tissu (21), la deuxième couche de tissu (22) et la couche intermédiaire (23) est formée.
